# EUROPEAN PATENT APPLICATION

(11) **EP 3 252 693 A1**
(43) Date of publication of application: **06.12.2017**
(21) Application number: 17172815.7
(22) Date of filing: 24.05.2017
(51) Int. Cl.: G06Q 30/00, G06Q 50/12

(54) **SALES DATA PROCESSING APPARATUS AND METHOD FOR EASILY FINDING CUSTOMER**

(30) Priority: 31.05.2016 JP 2016109176
(71) Applicant: Toshiba TEC Kabushiki Kaisha, Tokyo 141-0032 (JP)
(72) Inventor: TAKAHASHI, Jun, Shinagawa-ku, Tokyo 141-8562 (JP)
(74) Representative: Takeuchi, Maya

(57) **Abstract**

In accordance with an embodiment, a sales data processing apparatus comprises a generation module configured to generate feature information indicating features of a customer based on a captured image obtained by photographing the customer who orders an article, and a printing control module configured to print the feature information generated by the generation module on a paper to deliver the article ordered to the customer.

## Description

### FIELD

Embodiments described herein relate generally to a sales data processing apparatus and a method for easily finding a customer.

### BACKGROUND

In a store such as a fast food restaurant, if it takes much time to cook a food a customer ordered, a number ticket, for example, is delivered to the customer and the customer waits at his or her table. When the food is ready to be delivered, a store clerk finds the customer, relying on the number ticket to deliver a finished food.

However, if the store is crowded or is wide, it takes much time for the store clerk to find the customer to which the food is delivered.

### DESCRIPTION OF THE DRAWINGS

Fig. 1 is a schematic view of a layout of a store according to the embodiment;
Fig. 2 is a plan view of the vicinity of a checkout section including a POS terminal;
Fig. 3 is perspective view of the vicinity of the checkout section including the POS terminal;
Fig. 4 is a block diagram illustrating the hardware structure of the POS terminal;
Fig. 5 is a diagram illustrating an example of a face master file in the POS terminal;
Fig. 6 is a block diagram illustrating the hardware structure of a printer;
Fig. 7 is a functional block diagram illustrating components of the POS terminal;
Fig. 8 is a flowchart illustrating the flow of a control processing by the POS terminal;
Fig. 9 is a flowchart illustrating the flow of a control processing by the printer;
Fig. 10 is a diagram illustrating an example of a paper printed by the printer; and
Fig. 11 is a diagram illustrating another example of the paper printed by the printer.

### DETAILED DESCRIPTION

In accordance with an embodiment, a sales data processing apparatus comprises a generation module configured to generate feature information indicating features of a customer based on a captured image obtained by photographing the customer who orders an article, and a printing control module configured to print the feature information generated by the generation module on a paper to deliver the article ordered to the customer.

The sales data processing apparatus may further comprise an attribute determination module configured to determine attribute of the customer based on the captured image. In this case, the generation module generates attribute information corresponding to the attribute of the customer determined by the attribute determination module as the feature information.

The sales data processing apparatus may further comprise a clothing determination module configured to determine a category of clothing the customer wears based on the captured image.

The generation module may generate clothing information corresponding to the category of the clothing the customer wears determined by the clothing determination module as the feature information.

Preferably, the generation module generates the feature information indicating a photography of the customer based on the captured image.

The sales data processing apparatus may further comprise a movement direction determination module configured to determine a movement direction of the customer from continuous images, the continuous images being acquired from the captured image obtained by photographing the customer.

Preferably, the generation module generates movement information based on the movement direction of the customer determined by the movement direction determination module.

The present invention further relates to a method for easily finding a customer, including: generating feature information indicating features of a customer based on a captured image obtained by photographing the customer who orders an article; and printing the generated feature information on a paper to deliver the article ordered to the customer.

The method may further comprise determining attribute of the customer based on the captured image generating attribute information corresponding to the attribute of the customer determined as the feature information.

The method may further comprise determining a category of clothing the customer wears based on the captured image, and generating clothing information corresponding to the category of the clothing the customer wears determined as the feature information.

The method may further comprise generating the feature information indicating a photography of the customer based on the captured image.

The method may further comprise determining a movement direction of the customer from continuous images, the continuous images being acquired from the captured image obtained by photographing the customer and generating movement information based on said determined movement direction of the customer determined from continuous images.

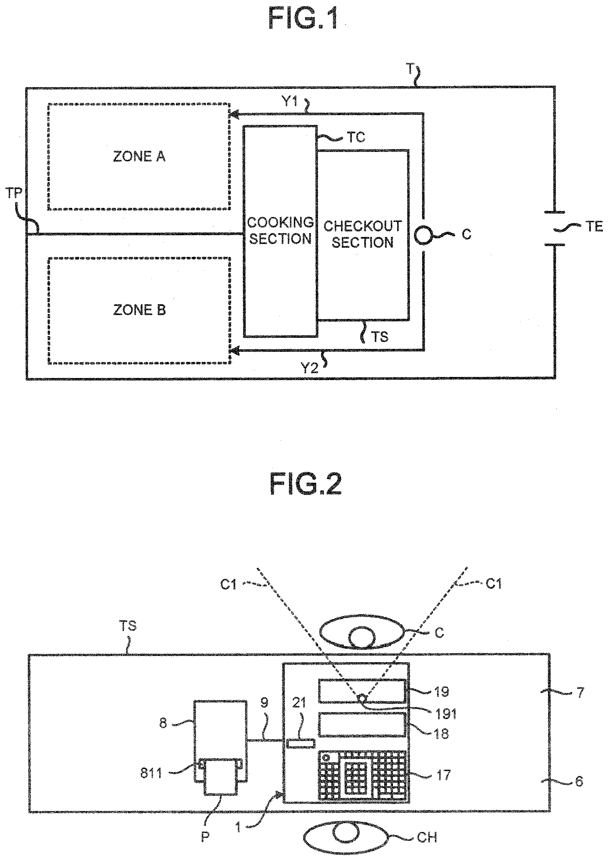

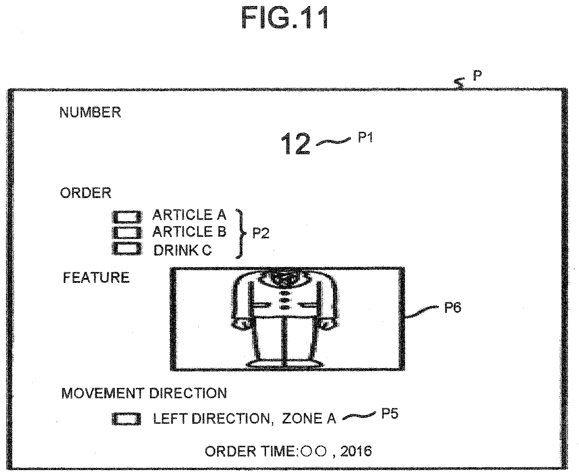

Hereinafter, with reference to Fig. 1∼Fig. 11, a sales data processing apparatus and a method for easily finding a customer according to the embodiment is described in detail as non-limiting examples. In the embodiment, a POS terminal is described as an example of the sales data processing apparatus. Furthermore, the embodiment described below is not intended to limit the present invention.

Fig. 1 is a plan view illustrating a layout of each section in a store T according to the embodiment. In Fig. 1, the store T is, for example, a fast food restaurant in which an article or food such as a hamburger is sold and a customer can eat and drink therein. The store T includes a checkout section TS for processing payment for articles, a cooking section TC for cooking the articles, and a zone A and a zone B where tables and chairs for customers C are respectively arranged to eat the purchased articles. The zone A is, for example, a space where the customer can smoke, and the zone B is, for example, a space where the customer cannot smoke. The zone A and the zone B are separated by a wall or a partition TP of a glass.

The customer C who enters the store through an entrance TE of the store T orders an article at the checkout section TS. A restaurant staff CH receives payment of the article ordered by the customer C (sells the article). In a case of immediately delivering the ordered article to the customer C, the restaurant staff CH (refer to Fig. 2) hands over the article to the customer C. The customer C who receives the article moves in a direction shown by an arrow Y1 or an arrow Y2. The customer C who moves in the direction shown by the arrow Y1 eats in the zone A. The customer C who moves in the direction shown by the arrow Y2 eats in the zone B.

On the other hand, in a case in which it takes much time to cook the article ordered by the customer C, the restaurant staff CH hands over a number ticket on which a number is printed to the customer C. The customer C moves to the zone A or the zone B to wait for until ready to serve the article. If the ordered article is cooked, the restaurant staff CH delivers the article to the table of the customer C present in the zone A or the zone B.

Fig. 2 is a schematic plan view illustrating a POS terminal 1 arranged in the checkout section TS in the store T. In the store T, the checkout section TS is arranged to sell the articles displayed in the store T. The checkout section TS is provided with a counter 6 with an elongated shape. The counter 6 has an upper surface 7 formed in a flat-shape.

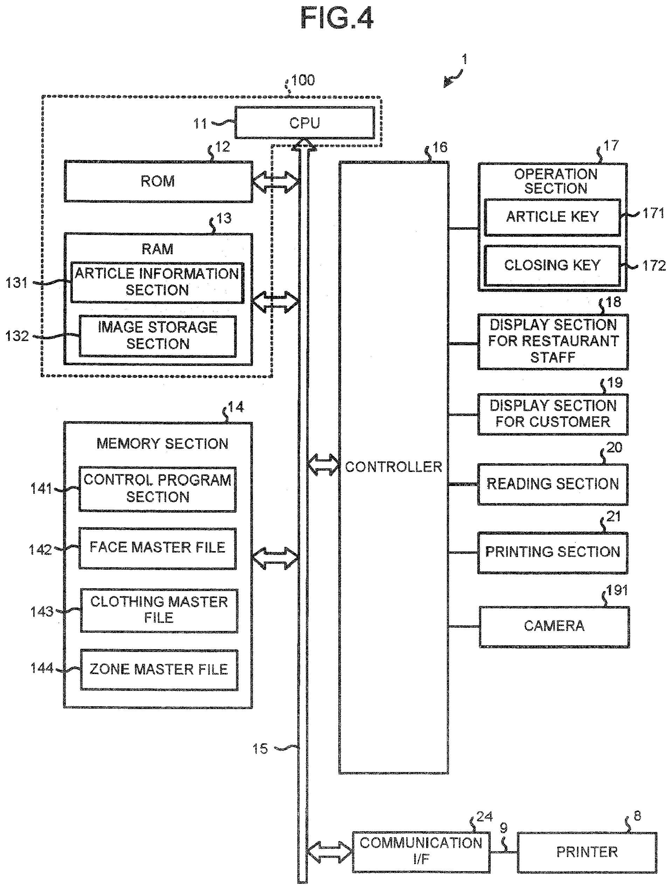

The POS terminal 1 is arranged on the surface 7. The POS terminal 1 includes an operation section 17 such as a keyboard operated by the restaurant staff CH, a display section for restaurant staff 18 for displaying information to the restaurant staff CH and a display section for customer 19 for displaying information to the customer C. The operation section 17 includes article keys for respectively designating articles by being operated and a closing key (refer to Fig. 4).

A camera 191 is arranged on the upper side of an outer frame of the display section for customer 19. The camera 191 is constituted by a CCD (Charge Coupled Device) image sensor and the like. The camera 191 is arranged to face the customer C side who orders the article. The camera 191 is arranged at a position substantially in front of the customer C if the customer C looks at a display of the display section for customer 19 at the time the customer C who is present in an area surrounded by C1 at the customer C side of the POS terminal 1 orders the article.

The camera 191 captures a motion image or a continuous still image (collectively referred to as an "image") of the whole body of the customer C who orders the article. In the embodiment, for example, 10 images of the customer C are captured in one second. The captured image contains clothing (coat, trousers, skirt, cap, eyeglasses, etc.) worn by the customer C in addition to the face of the customer C.

The restaurant staff CH and the customer C stand across the counter 6 such that the restaurant staff CH stands at an operation side of the POS terminal 1 and the customer C stands at a passage side opposite to the operation side. The customer C orders the article while seeing a menu. The restaurant staff CH operates the article key provided in the POS terminal 1, and in this way, the POS terminal 1 executes a sales registration processing on the article. The sales registration processing includes the following processing. The sales registration processing contains a processing of displaying an article name and unit price (collectively referred to as article information) of the article if information of the article ordered by the customer C is input. The sales registration processing also contains a processing of storing the article information in an article information section 131 (refer to Fig. 4).

The restaurant staff CH operates the closing key if receiving all the orders from the customer C. Then, the POS terminal 1 executes a settlement processing on the article on which the sales registration processing is executed. The settlement processing includes the following processing. The settlement processing contains a processing of displaying a total amount obtained by totalizing an amount of the articles on which the sales registration processing is executed based on the article information stored in the article information section 131. The settlement processing contains a processing of calculating change based on an amount deposited by the customer C to display the change, a processing of instructing a change dispensing machine to dispense the change, and a processing of issuing a receipt on which the article information and settlement information (total amount, tax amount, deposit amount, change amount etc.) are printed. One transaction refers to a process from the beginning of the sales registration processing to the end of the settlement processing for one customer C.

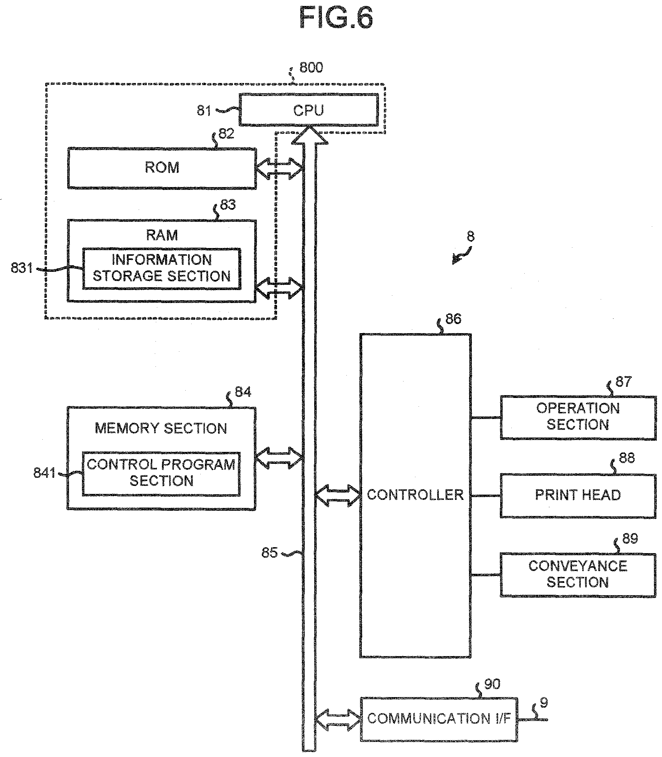

The printer 8 is placed on the surface 7 of the counter 6. The printer 8 is equipped with a thermal transfer type print head. The printer 8 has a housing section for housing an elongated paper (thermal paper) in a rolled form. The printer 8 also has a conveyance section that draws out a front end of the stored elongated paper and conveys it to a position of a print head (refer to Fig. 6).

Such the printer 8 is electrically connected to the POS terminal 1 via a communication line 9. The printer 8 receives printing information from the POS terminal 1. The printing information includes number of the number ticket handed over to the customer C, feature information of the customer C (in the embodiment, attribute information (gender, age bracket, etc.) of the customer C) and movement information of the customer C (including information indicating that the customer is present in the zone A or the zone B). The printing information includes clothing information of the customer C (clothing type, color, etc.).

If receiving the printing information from the POS terminal 1, the printer 8 conveys the front end of the elongated paper in the direction of the print head. Further, the printer 8 heats the print head, and creates a paper P obtained by printing the printing information on the elongated paper. Then, the printer 8 issues the paper P on which the printing information is printed from an issuing port 811. The paper P is seen by the restaurant staff CH to deliver the ordered article to the customer C.

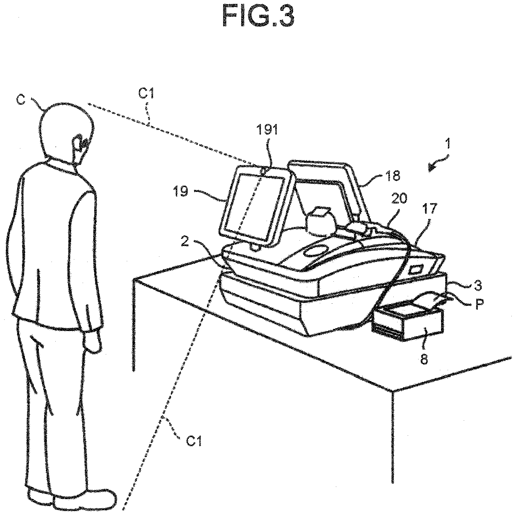

Fig. 3 is perspective view illustrating the appearance of the POS terminal 1 according to the embodiment if viewed from the customer C side. In Fig. 3, the POS terminal 1 includes a main body 2 and a cash box 3. The cash box 3 has a drawer to store securities such as banknotes, coins and gift certificates deposited from the customer C, and change to be handed over to the customer C.

The main body 2 is provided with the operation section 17 such as a keyboard for inputting information, the display section for restaurant staff 18 composed of a liquid crystal display and the like to display information to the restaurant staff CH, an operator, and the display section for customer 19 composed of a liquid crystal display and the like to display information to the customer C. The main body includes therein a reading section 20 for reading a code such as a barcode and a two-dimensional code attached to the article. The reading section 20 reads the code attached to the article with the CCD image sensor to input the read code. The main body 2 also includes therein a control section 100 (refer to Fig. 4) of the POS terminal 1 and a printing section 21 for printing article information to issue a receipt.

The camera 191 is provided at the upper central part of a display surface side of the display section for customer 19 of the POS terminal 1. The camera 191 captures a whole body image including the face of the customer C. The camera 191 also captures the clothing the customer C wears.

Next, the hardware of the POS terminal 1 is described. Fig. 4 is a block diagram illustrating the hardware structure of the POS terminal 1. In Fig. 4, the POS terminal 1 includes a CPU (Central Processing Unit) 11, a ROM (Read Only Memory) 12, a RAM (Random Access Memory) 13 and a memory section 14. The CPU 11 is a control main body. The ROM 12 stores various programs. The RAM 13 copies or decompresses programs and various data. The memory section 14 stores various programs. The CPU 11, the ROM 12, the RAM 13 and the memory section 14 are connected with each other through a data bus line 15. The CPU 11, the ROM 12 and the RAM 13 constitute the control section 100. In other words, the CPU 11 operates according to a control program which is stored in a control program section 141 in the ROM 12 or the memory section 14 and copied or decompressed on the RAM 13, and in this way, the control section 100 executes a control processing described later.

The RAM 13 includes an article information section 131 and an image storage section 132. The article information section 131 stores article information (article code, article name, price of article, etc.) of the article to which the sales registration processing is carried out. The image storage section 132 stores an image captured by the camera 191. Specifically, the image storage section 132 stores the whole body image of the customer C captured by the camera 191. The image storage section 132 also stores the clothing the customer C wears photographed by the camera 191. The control section 100 of the POS terminal 1 executes a face detection for detecting a face of the customer C based on the whole body image stored in the image storage section 132. A face detection technology is a well-known technology which detects all parts (eyes, nose, mouth, ears, chin, etc.) on a face described later from an image captured by the camera 191 to detect the face of a person.

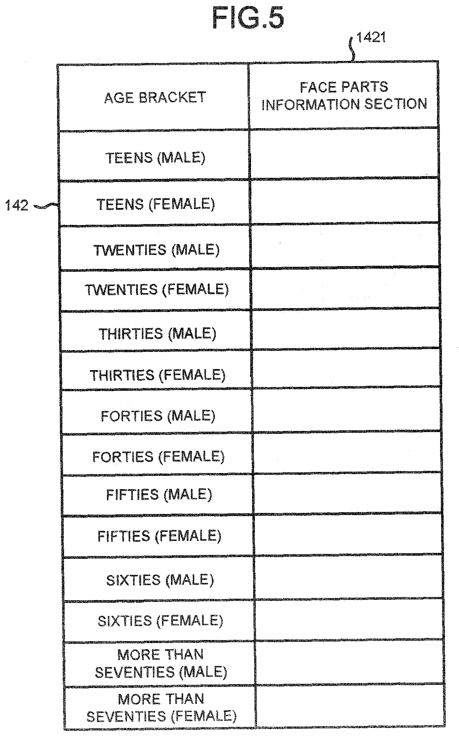

The memory section 14 is constituted by a non-volatile memory such as an HDD (Hard Disc Drive) and a flash memory which holds stored information even if a power is cut off to store the control program stored in the control program section 141. The memory section 14 includes a face master file 142 (refer to Fig. 5), a clothing master file 143 and a zone master file 144. The clothing master file 143 stores a category of the clothing and features of each category of the clothing in an associated manner. The control section 100 extracts the features of the clothing from the image of the clothing captured by the camera 191. The control section 100 compares the extracted features of the clothing and the features stored in the clothing master file 143 to determine the category of the clothing having the features. The zone master file 144 stores a zone to which the customer C moves in accordance with a direction in which the customer C moves from the position of the POS terminal 1. The zone A is stored if the customer C moves from the position of the POS terminal 1 to a left direction (arrow Y1 direction). The zone B is stored if the customer C moves from the position of the POS terminal 1 to a right direction (arrow Y2 direction). The control section 100 determines a movement direction of the customer C from continuous images which are captured by the camera 191 and stored in the image storage section 132. For example, in a case in which the continuous images indicating that the customer C moves in the left direction is stored, the control section 100 determines that the customer C moves to the zone A based on the zone master file 144. In a case in which the continuous images indicating that the customer C moves in the right direction is stored, the control section 100 determines that the customer C moves to the zone B based on the zone master file 144.

The operation section 17, the display section for restaurant staff 18, the display section for customer 19, the reading section 20, the printing section 21 and the camera 191 are connected with the data bus line 15 through a controller 16. The controller 16 receives an instruction from the control section 100 to control the operation section 17, the display section for restaurant staff 18, the display section for customer 19, the reading section 20, the printing section 21 and the camera 191. However, a control executed by the controller 16 is described as a control executed by the control section 100 for the convenience of the description purpose.

The operation section 17 is provided with various keys including the article keys 171 for designating the article and the closing key 172. The article key 171 is used for specifying the article sold in the store T. One article key 171 is prepared for one article. If the article key 171 of an article is operated, the article corresponding to the article key 171 operated is specified and the control section 100 executes the sales registration processing to the corresponding article. The closing key 172 is used to declare the end of the transaction and execute the settlement processing.

The reading section 20 is constituted with a CCD image sensor or the like, and reads a code symbol such as a barcode or a two-dimensional code with the CCD to acquire an article code. The reading section 20 is used to designate the article to which the code symbol is attached (i.e., the article which cannot be designated by the operation of the article key 171).

The printing section 21 draws out a rolled receipt paper housed in the main body 2, and the article information and the settlement information are printed with a thermal printer provided with the thermal transfer type print head to issue the paper as a receipt.

Further, the control section 100 is electrically connected to a communication I/F (Interface) 24 via the data bus line 15. The communication I/F 24 is connected to the printer 8 via the communication line 9.

Fig. 5 is a memory map illustrating the face master file 142 in the memory section 14. In Fig. 5, the face master file 142 includes a face parts information section 1421 for storing face parts information of persons from teens to more than seventy years old for each gender and each age bracket. Each face parts information section 1421 stores the face parts information with which attributes (age bracket and gender) of persons can be specified, respectively.

The face parts information refers to data which indicates each part and feature of each attribute classified by matching with parts and features of individual face. For example, the data includes features of parts (eyes, nose, mouth, ears and chin of an individual) and deformation features of the face such a smiling face, a serious face, closing eyes or opening eyes. The face parts information stored for each attribute indicates features of an attribute different from other attributes. For example, the face parts information section 1421 of the teens (male) stores information of eyes, nose, mouth and ears indicating features of male of teens and information of smiling face and serious face indicating features of male of teens. The face parts information for each attribute is created based on a large amount of statistics data to obviously indicate the attributes thereof.

The hardware of the printer 8 is described. Fig. 6 is a block diagram illustrating the hardware structure of the printer 8. In Fig. 6, the printer 8 includes a CPU 81, a ROM 82, a RAM 83 and a memory section 84. The CPU 81 is a control main body. The ROM 82 stores various programs. The RAM 83 copies or decompresses programs and various data. The memory section 84 stores various programs. The CPU 81, the ROM 82, the RAM 83 and the memory section 84 are connected with each other through a data bus line 85. The CPU 81, the ROM 82 and the RAM 83 constitute a control section 800. In other words, the CPU 81 operates according to a control program which is stored in a control program section 841 in the ROM 82 or the memory section 84 and copied or decompressed on the RAM 83, and in this way, the control section 800 executes the control processing described later.

The RAM 83 includes an information storage section 831. The information storage section 831 temporarily stores the printing information received from the POS terminal 1. The memory section 84 is constituted by a nonvolatile memory such as an HDD or a flash memory that holds stored information even if the power is cut off to store the control program and the like stored in the control program section 841.

The control section 800 is connected to an operation section 87, a thermal transfer type print head 88 and a conveyance section 89 with a data bus line 85 via a controller 86. The controller 86 controls the operation section 87, the print head 88 and the conveyance section 89 by receiving an instruction from the control section 800. However, a control executed by the controller 86 is described as a control executed by the control section 800 for convenience of the description purpose.

The control section 800 is connected with a communication I/F 90 via the data bus line 85. The communication I/F 90 is connected to the POS terminal 1 via the communication line 9.

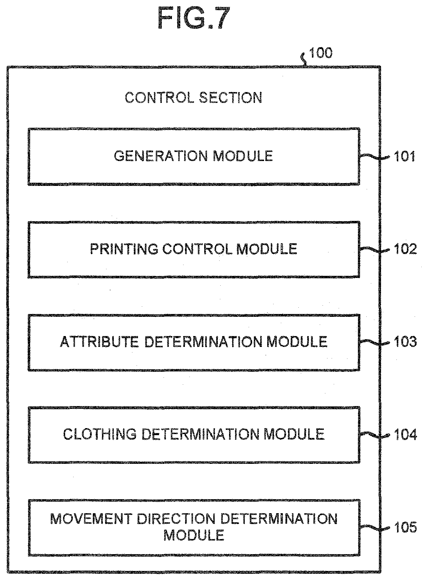

Hereinafter, a control processing executed by the POS terminal 1 and the printer 8 is described. Fig. 7 is a functional block diagram illustrating functional components of the POS terminal 1. The control section 100 functions as a generation module 101, a printing control module 102, an attribute determination module 103, a clothing determination module 104 and a movement direction determination module 105 by operating according to various programs including a control program stored in the ROM 12 and the memory section 14.

The generation module 101 has a function of generating the feature information indicating the feature of the customer based on the captured image obtained by photographing the customer C who orders the article.

The printing control module 102 has the function of printing the feature information generated by the generation module 101 on the paper to deliver the article to the customer who orders the article.

The attribute determination module 103 has a function of determining the attribute of the customer C based on the captured image.

The clothing determination module 104 has a function of determining the category of the clothing that the customer C wears based on the captured image.

The movement direction determination module 105 has a function of determining the movement direction of the customer from the continuous images, i.e., the captured images.

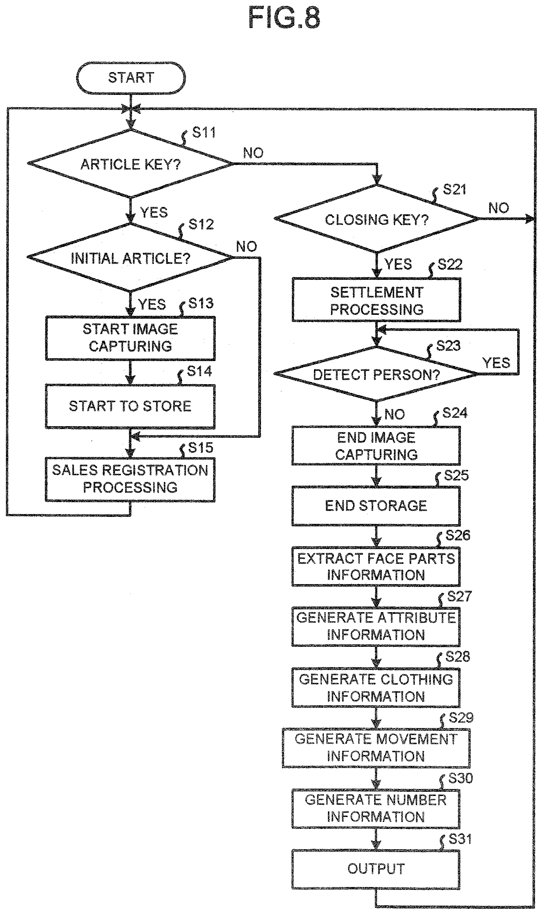

The control processing by the POS terminal 1 is described. Fig. 8 is a flowchart illustrating the flow of the control processing by the POS terminal 1 in a case in which the restaurant staff CH delivers the article ordered by the customer C. In Fig. 8, the control section 100 determines whether or not the article key 171 is operated (ACT S11). If it is determined that the article key 171 is operated (Yes in ACT S11), the control section 100 further determines whether or not the operation on the article key 171 is the order of the initial or first article in the transaction (ACT S12). The control section 100 determines that the operation on the article key 171 is the order of the initial article in the transaction if the article information is not stored in the article information section 131. If it is determined that the operation on the article key 171 is the order of the initial article in the transaction (Yes in ACT S12), the control section 100 starts the camera 191 to photograph the customer C (ACT S13). The control section 100 starts the store of the captured image by the camera 191 to the image storage section 132 (ACT S14) . The control section 100 executes the sales registration processing on the article corresponding to the operated article key 171 (ACT S15). In other words, the control section 100 displays the article information (article name, unit price, etc.) on both the display section for restaurant staff 18 and the display section for customer 19 and stores the article information in the article information section 131. The control section 100 returns to the processing in ACT S11. If it is determined that the operation on the article key 171 is not the order of the initial article in the transaction (No in ACT S12), the control section 100 proceeds to the processing in ACT S15.

On the other hand, if it is determined that the article key 171 is not operated (No in ACT S11), the control section 100 determines whether or not the closing key 172 is operated (ACT S21). If it is determined that the closing key 172 is operated (Yes in ACT S21), the control section 100 executes the settlement processing relating to the transaction based on the article information stored in the article information section 131 (ACT S22). The control section 100 further determines whether or not a person (customer C) is detected in the captured image by the camera 191 (ACT S23) . If the face of the person is detected in the last captured image stored in the image storage section 132, the control section 100 determines that the person is detected. The control section 100 determines the face of a person other than the customer C (customer C present at the closest position to the camera 191) who orders the article from a size of a photographed face in the captured image stored in the image storage section 132, and does not execute the face detection if it is determined that the face is not the customer C who orders the article.

If it is determined that the person is detected (Yes in ACT S23), the control section 100 repeats the processing in ACT S23. If it is determined that the person is not detected (No in ACT S23), the control section 100 ends the image capturing operation by the camera 191 (ACT S24) . The control section 100 also ends the store of the captured image in the image storage section 132 (ACT S25).

The control section 100 detects the face of the customer C based on the captured image stored in the image storage section 132, and extracts the face parts information of the face from the detected face (ACT S26). The control section 100 (attribute determination module 103) retrieves the face master file 142 based on the extracted face parts information to determine the attribute of the face. In the embodiment, the control section 100 determines the gender and the age bracket of the face. The control section 100 (generation module 101) generates the attribute information (feature information) indicating the determined attribute (ACT S27).

The control section 100 extracts characteristic form of the clothing and the color of the clothing the customer C wears based on the captured image stored in the image storage section 132. The control section 100 (clothing determination module 104) retrieves the clothing master file 143 based on the extracted form of the clothing to determine the category of the clothing. The clothing master file 143 stores the features of the clothing for distinguishing the clothing from other clothing for each category of the clothing. The control section 100 compares the features of the clothing obtained from the captured image and the features of the clothing stored in the clothing master file 143 to determine the category of the clothing. The control section 100 (generation module 101) generates the clothing information (feature information) from the determined category and the color of the clothing (ACT S28).

The control section 100 (movement direction determination module 105) determines the movement direction of the customer C based on the image stored in the image storage section 132. In other words, the control section 100 determines whether the customer moves in the left direction or the right direction. If it is determined that the customer C moves in the left direction in the Figure, the control section 100 generates the movement information including information indicating the movement direction of the customer C and information indicating a movement destination (zone A) (ACT S29). On the other hand, if it is determined that the customer C moves in the right direction, the control section 100 generates the movement information including information indicating the movement direction of the customer C and information indicating a movement destination (zone B) (ACT S29).

The control section 100 generates number information of the number given to the customer C (ACT S30) . The number given to the customer C is the same as the number displayed on the number ticket handed over to the customer C. The number given to the customer C is input by the restaurant staff CH from the operation section 17. The control section 100 generates the number information based on the input number. In other words, the customer C is associated with the number.

The control section 100 (printing control module 102) generates the printing information based on the attribute information generated in ACT S27, the clothing information generated in ACT S28, the movement information generated in ACT S29, and the number information generated in ACT S30 to send (output) the printing information to the printer 8 (ACT S31) . The printing information based on the attribute information, the clothing information, the movement information and the number information is printed on the paper P. In other words, the control section 100 sends the printing information based on the attribute information, the clothing information, the movement information and the number information to the printer 8 and also sends a printing command to the printer 8 to print each information on the paper P by the printer 8. The control section 100 returns to the processing in ACT S11. In the embodiment, if the control section 100 sends the attribute information, the clothing information, the movement information and the number information to the printer 8, the control section 100 sends the information converted to the printing information. However, the control section 100 may send the attribute information, the clothing information, the movement information and the number information to the printer 8 without converting them to the printing information, and may print the information on the paper P by the printer 8. In this case, the control section 100 sends the attribute information, the clothing information, the movement information and the number information to the printer 8 the printer 8 converts the transferred information to the printing information to print the information. In ACT S21, if it is determined that the closing key 172 is not operated (No in ACT S21), the control section 100 returns to the processing in ACT S11.

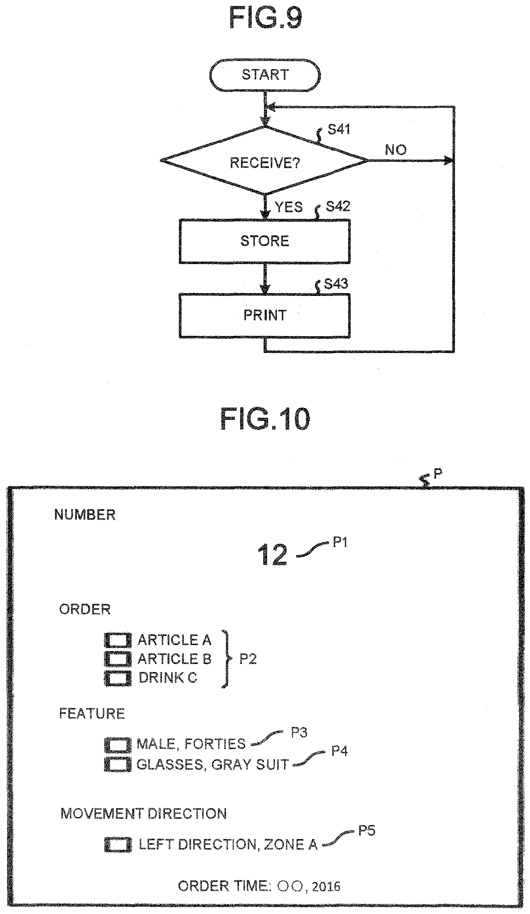

Hereafter, the control processing of the printer 8 is described. Fig. 9 is a flowchart illustrating the flow of the control processing by the printer 8. In Fig. 9, the control section 800 determines whether or not the printing information is received from the POS terminal 1 (ACT S41). If it is determined that the printing information is received (Yes in ACT S41), the control section 800 stores the received printing information in the information storage section 831 (ACT S42).

The control section 800 prints the stored printing information on the paper P to issue it (ACT S43). In other words, the control section 800 controls the conveyance section 89 to convey the front end of the rolled paper towards the print head 88. At the same time, the control section 800 prints the printing information stored in the information storage section 831 on the elongated (rolled) paper with the print head 88. The control section 800 issues the printed elongated paper as the paper P from the issuing port 811. The control section 800 then returns to the processing in ACT S41. If it is determined that the printing information is not received from the POS terminal 1 (No in ACT S41), the control section 800 returns to the processing in ACT S41.

An example of the printing on the paper P issued in ACT S43 is described. Fig. 10 is a diagram illustrating an example of the paper P printed by the printer 8. In Fig. 10, the paper P includes a number part P1, an article information part P2, an attribute information part P3, a clothing information part P4 and a direction information part P5. In the number part P1, the number same as that on the number ticket delivered to the customer C is printed. In the article information part P2, a part of the article information, for example, the article name of the article ordered by the customer C is printed. In the attribute information part P3, the attribute information of the customer C generated in ACT S27 is printed. In the embodiment, the attribute information indicating that the customer C is male and is in his forties is printed. In the clothing information part P4, the clothing information of the customer C generated in ACT S28 is printed. In the embodiment, the clothing information indicating that the customer C wears glasses and a gray suit is printed. In the direction information part P5, the movement information of the customer C generated in ACT S29 is printed. In the embodiment, the movement information indicating that the customer C moves in the left direction and is present in the zone A is printed.

The restaurant staff CH takes the article and the paper P if the cooking of the article is completed and moves to the zone A based on the direction information printed in the direction information part P5. The restaurant staff CH finds the customer C based on the attribute information of the customer C printed in the attribute information part P3 and the clothing information printed in the clothing information part P4. In this case, for example, even if the zone A is overcrowded or the zone A is wide, the restaurant staff CH can easily find the person based on the attribute and the clothing of the customer C. In a case in which the corresponding person is found, the restaurant staff CH approaches the person to compare the number displayed in the number ticket owned by the person with the number printed in the number part P1. If the two numbers are coincident, the restaurant staff CH can confirm that the person is the customer C he or she (staff CH) desires to find. In this way, the restaurant staff CH first finds the corresponding person based on the attribute information and the clothing information printed on the paper P. If the corresponding person is found, the restaurant staff CH then compares the number on the number ticket and the number on the paper P to be capable of confirming the corresponding customer C. Thus, the restaurant staff CH can find the corresponding customer C early.

Fig. 11 is a diagram illustrating another example of the paper printed by the printer 8. In Fig. 11, the paper P includes the number part P1, the article information part P2, a photo information part P6 and the direction information part P5. The number part P1, the article information part P2 and the direction information part P5 are the same as those in the example in Fig. 10. In the case of the example in Fig. 11, the control section 100 (generation module 101) generates photo information printed on the paper P as the attribute information and the clothing information (both are the feature information) based on the image stored in the image storage section 132 in ACT S27 and ACT S28. In this case, it is desired that the photo information is information of the whole body image except for information determined as the face of the customer C. The photo of the face is excluded from the photo information from the viewpoint of protection of personal information. In the photo information part P6, the printing information of the photo information except the face generated in ACT S27 is printed. In the photo information part P6, the photo information of the customer C except for the face of the customer C is printed. From the photo information, the gender of the customer C and the clothing the customer C wears can be known.

The restaurant staff CH moves to the zone A based on the direction information printed in the direction information part P5 on the paper P. The restaurant staff CH finds the customer C based on the photo information of the customer C printed in the photo information part P6. In this case, for example, even if the zone A is overcrowded or the zone A is wide, the restaurant staff CH can easily find the person based on the gender of the customer C and the clothing the customer C wears. If the corresponding person is found, the restaurant staff CH comes to the person to compare the number displayed on the number ticket owned by the person with the number printed in the number part P1. If the two numbers are coincident, the restaurant staff CH can confirm that the person is the customer C she or he desires to find. In this way, the restaurant staff CH first finds the corresponding person based on the photo information printed on the paper P. If the corresponding person is found, the restaurant staff CH next compares the number on the number ticket and the number on the paper P to be capable of confirming the corresponding customer C. Thus, the restaurant staff CH can find the corresponding customer C early.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope of the invention.

For example, in the embodiment, the printer 8 is separate from the POS terminal 1; however, the present embodiment is not limited to this. The printing section 21 may also serve as the printer 8. In this case, the printing section 21 issues the paper P after the printing.

In the embodiment, the attribute information and the clothing information are transmitted to the printer 8 as the feature information; however, the present embodiment is not limited to this. Either one of the feature information may be transmitted to the printer 8. Transmission of the movement information and the number information is not an essential requirement.

In the embodiment, the movement information indicating the movement direction and the movement destination is generated; however, either one of the movement direction and the movement destination may be used as the movement information.

In the embodiment, the sales registration processing of the article is executed before the article ordered by the customer C is delivered to the customer C; however, for example, at the time the restaurant staff CH delivers the article to the customer C, or after delivery, the sales registration processing of the article may be executed.

In the embodiment, the article information part P2 representing the article information of the article ordered by the customer C is printed on the paper P; however, the article information part P2 may not be printed.

In the embodiment, images captured by 10 images per second are used as continuous images; however, it is not limited to this. The continuous images may be optional as long as the images are captured at a predetermined time interval, and the continuous images may also be a moving image.

Furthermore, the programs executed by the POS terminal 1 of the embodiment may be recorded in a computer-readable recording medium such as a CD-ROM, an FD (flexible disk), a CD-R or a DVD (Digital Versatile Disk) in a form of installable or executable file.

The programs executed by the POS terminal 1 of the embodiment may be stored in a computer connected with a network such as an internet and be supplied by being downloaded through the network. Further, the programs executed by the sales data processing apparatus of the embodiment may be supplied or distributed through a network such as an internet.

The programs executed by the POS terminal 1 of the embodiment may be supplied in a manner of being incorporated with the ROM.

## Claims

1. A sales data processing apparatus, comprising:
a generation module configured to generate feature information indicating features of a customer based on a captured image obtained by photographing the customer who orders an article; and
a printing control module configured to print the feature information generated by the generation module on a paper to deliver the article ordered to the customer.

2. The sales data processing apparatus according to claim 1, further comprising an attribute determination module configured to determine attribute of the customer based on the captured image, wherein
the generation module generates attribute information corresponding to the attribute of the customer determined by the attribute determination module as the feature information.

3. The sales data processing apparatus according to claim 1 or 2, further comprising a clothing determination module configured to determine a category of clothing the customer wears based on the captured image, wherein
the generation module generates clothing information corresponding to the category of the clothing the customer wears determined by the clothing determination module as the feature information.

4. The sales data processing apparatus according to any one of claims 1 to 3, wherein the generation module generates the feature information indicating a photography of the customer based on the captured image.

5. The sales data processing apparatus according to any one of claims 1 to 4, further comprising:
a movement direction determination module configured to determine a movement direction of the customer from continuous images, the continuous images being acquired from the captured image obtained by photographing the customer, wherein
the generation module generates movement information based on the movement direction of the customer determined by the movement direction determination module.

6. A method for finding a customer, including:
generating feature information indicating features of a customer based on a captured image obtained by photographing the customer who orders an article; and
printing the generated feature information on a paper to deliver the article ordered to the customer.

7. The method according to claim 6, further comprising determining attribute of the customer based on the captured image, and
Generating attribute information corresponding to the attribute of the customer determined as the feature information.

8. The method according to claim 6 or 7, further comprising determining a category of clothing the customer wears based on the captured image, and generating clothing information corresponding to the category of the clothing the customer wears determined as the feature information.

9. The method according to any one of claims 6 to 8, further comprising generating the feature information indicating a photography of the customer based on the captured image.

10. The method according to any one of claims 6 to 9, further comprising determining a movement direction of the customer from continuous images, the continuous images being acquired from the captured image obtained by photographing the customer and generating movement information based on said determined movement direction of the customer determined from continuous images.
